# EUROPÄISCHE PATENTSCHRIFT

(11) **EP 1 645 761 B1**
(45) Veröffentlichungstag und Bekanntmachung des Hinweises auf die Patenterteilung: **11.11.2009**
(21) Anmeldenummer: 05020660.6
(22) Anmeldetag: 22.09.2005
(51) Int. Cl.: F16C 17/08, F16C 27/08, F16H 57/02, H02K 5/16, F16F 1/32

(54) **Lagerelement**
Bearing element
Elément de palier

(30) Priorität: 07.10.2004 DE 102004049105
(43) Veröffentlichungstag der Anmeldung: 12.04.2006
(73) Patentinhaber: IMS Gear GmbH, 78166 Donaueschingen (DE)
(72) Erfinder: Möhring, Keven, 86879 Wiedergeltingen (DE)
(74) Vertreter: Patentanwälte Westphal, Mussgnug & Partner

(56) Entgegenhaltungen:
- DE-A1- 10 053 797
- DE-A1- 19 920 629
- DE-C1- 19 602 926
- US-A- 4 387 790

## Beschreibung

Die Erfindung bezieht sich auf ein Lagerelement mit den oberbegrifflichen Merkmalen des Patentanspruchs 1 bzw. auf ein Lager mit einem solchen Lagerelement.

Allgemein bekannt ist eine Anordnung zur spielfreien Axiallagerung eines Antriebsstranges, z. B. einer Achse oder Welle. In einer Wandung, die stirnseitig einer solchen Welle quer zur Achsrichtung der Welle verläuft, ist eine Öffnung ausgebildet, in welcher ein topfförmiges Behältnis mit einer Seiten- und einer Bodenwand eingesetzt ist. Auf der Bodenwand ist eine Anlaufscheibe angeordnet, welche eine Verschleißfreiheit und Materialflexibilität gegenüber einer Stahlkugel bietet. Die Stahlkugel ist zwischen der Anlaufscheibe und einer stirnseitigen Kugelaufnahme der Welle angeordnet, so dass eine Kraftübertragung der Welle in axialer Richtung über die Kugel auf nur einen möglichst geringen Lagerabschnitt bzw. Lagerpunkt der Anlaufscheibe gerichtet ist. Dies führt zu einer Minimierung von Reibung durch eine Punktlast. Das topfförmige Behältnis ist mit seiner Seitenwand in der Öffnung der Wandung des Gehäuses in axialer Richtung verstellbar angeordnet, so dass die Welle stirnseitig mit einer entsprechenden Vorspannung durch geeignetes Einschrauben des topfförmigen Behältnisses beaufschlagbar ist. Beabstandet von der stirnseitigen Lageranordnung der Welle führt die Welle durch ein Gleitlager, welches insbesondere in einer weiteren Wandung des Gehäuses eingesetzt ist, so dass eine räumliche Festlegung der Welle in axialer Richtung erfolgt. Die Welle wird mit weiteren Komponenten, beispielsweise einer Wellfederscheibe relativ zu der zweiten Wandung des Gehäuses in Richtung des ersten Lagers mit der Anlaufscheibe mit einer Vorspannung beaufschlagt.

Ein solches Lagerelement umfasst somit einen Lagerabschnitt, an dem das Lagergegenelement, beispielsweise eine Antriebswelle, mit einer Kraftkomponente in Richtung des Lagerabschnitts gelagert abstützbar ist. Das Lagerelement umfasst außerdem zumindest einen Anlageabschnitt seitlich des Lagerabschnitts zum Anlegen des Lagerelements an einer Wandung des Lagers zum Festlegen und/oder Ausrichten des Lagerelements im Lager. Die Wandung des Lagers wird dabei durch eine bohrungsförmige oder topfförmige Öffnung in einer Gehäusewandung ausgebildet. In einem solchen Fall wird der Lagerabschnitt durch eine flächige Scheibe ausgebildet, deren Vorderseite zentral mit einem Abschnitt zum Abstützen des Lagergegenelements ausgebildet ist und deren seitliche Umfangswandung und Rückseite zum entsprechenden Anlegen an Wandungen der topfförmigen Öffnung im Lager ausgebildet sind.

Als weiterer Stand der Technik wird die DE 199 20 629 A1 genannt.

DE 199 20 629 A1 offenbart ein Kugellager als Festlager, welches in ein einseitig geschlossenes Gehäuse eingebaut ist. Das Kugellager weist eine Axialdruckfeder mit einer sternförmigen Gestalt dem Gehäuse zugewandt auf.

Die Aufgabe der Erfindung besteht darin, ein alternatives Lagerelement mit einem einfacheren Aufbau vorzuschlagen.

Diese Aufgabe wird durch ein Lagerelement mit den Merkmalen des Patentanspruchs 1 bzw. durch ein Axiallager mit den Merkmalen des Patentanspruchs 8 gelöst.

Erfindungsgemäß wird demgemäß ein Lagerelement für ein Axiallager zum gelagerten Abstützen eines Lagergegenelements, wobei das Lagerelement aufweist einen Lagerabschnitt, an dem das Lagergegenelement mit einer axialen Kraftkomponente in Richtung des Lagerabschnitts gelagert abstützbar ist, und zumindest einen Anlageabschnitt seitlich des Lagerabschnitts zum Anlegen des Lagerelements an einer Seitenwandung des Lagers zum Festlegen und/oder Ausrichten des Lagerelements im Lager, wobei Justier- und/oder Stützelemente seitlich vom Lagerabschnitt wegragen, wobei die Justier- und/oder Stützelemente zu jeweils benachbarten Justier- und/oder Stützelementen räumlich beabstandet sind und wobei die Justier- und/oder Stützelemente von dem Lagerabschnitt beabstandet jeweils zumindest einen Anlageabschnitt ausbilden.

Unter seitlich des Lagerabschnitts ist nicht zwingend seitlich zur Längsachse, insbesondere nicht senkrecht seitlich zur Längsachse einer Welle als Gegenlagerelement zu verstehen, sondern seitlich zum eigentlichen Umfang des zentralen Lagerabschnitts des Lagerelements. Die Dimensionierung des Körpers des zentralen Lagerabschnitts hängt von verschiedenen Faktoren ab, insbesondere von der erforderlichen Elastizität.

Bei dem erfindungsgemäßen Lagerelement, ist zumindest ein Teil der Justier- und/oder Stützelemente vom Lagerabschnitt aus derart geformt, dass deren Anlageabschnitt an einer Seitenwandung anliegend und an der Seitenwandung abgestützt anordenbar ist, insbesondere unter Spannung anliegend abgestützt anordenbar ist. Der Lagerabschnitt ist dabei seitlich des Lagerabschnitts angeordnet. Die Seitenwandung ist insbesondere parallel zur Kraftkomponente in Richtung des Lagerabschnitts und beabstandet zu dem Lagerabschnitt als Wandung des Lagers angeordnet. Bei dem erfindungsgemäßen Lagerelement ist Weiterhin zumindest ein Teil der Justier- und/oder Stützelemente vom Lagerabschnitt aus derart gebogen geformt, dass deren Anlageabschnitt an einer Rückseitenwandung anliegend und an der Rückseitenwandung abgestützt, insbesondere unter Spannung anliegend abgestützt, anordenbar ist. Die Rückenseitenwandung ist rückseitig des Lagerabschnitts gegenüber dem vorderseitigen Lagergegenelement und beabstandet zu dem Lagerabschnitt als Wandung des Lagers angeordnet. Vorteilhaft ist insbesondere ein Lagerelement, bei dem die zum Abstützen an der Seitenwandung ausgebildeten Justier-und/oder Stützelemente sich in Richtung der Seitenwandung weiter erstrecken als die zum Abstützen an der Rückseitenwandung ausgebildeten Justier- und/oder Stützelemente.

Bei dem erfindungsgemäßen Lagerelement erstrecken sich die zum Abstützen an der Rückseitenwandung ausgebildeten Justier-und/oder Stützelemente in Richtung der Rückseitenwandung axial weiter als die zum Abstützen an der Seitenwandung ausgebildeten Justier- und/oder Stützelemente.

Vorteilhafte Ausgestaltungen sind Gegenstand abhängiger Ansprüche.

Vorteilhaft ist insbesondere ein Lagerelement, bei dem zumindest die Justier- und/oder Stützelemente aus einem federelastischen Material bestehen.

Vorteilhaft ist insbesondere ein Lagerelement, bei dem die Justier- und/oder Stützelemente derart gebogen geformt sind, dass sie im Bereich von deren Anlageabschnitt parallel zur Wandung des Lagers verlaufen.

Vorteilhaft ist insbesondere ein Lagerelement, bei dem die Justier- und/oder Stützelemente vom Anlageabschnitt aus in einer Richtung von dem Lagergegenelement wegführend mit zumindest einer Richtungsteilkomponente der Kraftkomponente des Lagergegenelements verlaufen.

Vorteilhaft ist insbesondere ein Lagerelement, bei dem der Anlageabschnitt konvex, insbesondere zumindest teilkugelförmig in Richtung des Lagergegenelements geformt ist.

Vorteilhaft ist insbesondere ein Lagerelement, bei welchem der Lagerabschnitt und die Justier- und/oder Stützelemente einstückig ausgebildet sind.

Die Erfindung betrifft auch ein Axiallager zum abgestützten Lagern eines Lagergegenelements mit einem solchen Lagerelement und mit einer Wandung, insbesondere Bohrungs-und/oder topfförmigen Wandung, zum Ausbilden oder Aufnehmen einer Aufnahmeöffnung des Lagers zum Festlegen und/oder Ausrichten des Lagerelements im Lager, wobei das Lagerelement mit seinen Justier- und/oder Stützelementen in seitlicher Richtung aus Sicht einer Kraftkomponente des Lagergegenelements in Richtung des Lagerelements zwischen den Wandungen sich selbst ausrichtend eingespannt ist und/oder in Abstützrichtung des Lagergegenelements zwischen dem Lagergegenelement und einer bodenförmigen Wandung der Wandung des Lagers sich selbst ausrichtend eingespannt ist.

Vorteilhaft ist insbesondere ein Axiallager mit einer Achse oder Welle als Lagergegenelement, wobei die Achse bzw. Welle stirnseitig in axialer Richtung am Lagerabschnitt abgestützt ist.

Das Gegenlagerelement ist gemäß bevorzugter Ausführungsformen eine Achse bzw. eine rotierende oder in Rotation versetzbare Welle. Andere körperliche Formen sind als Lagergegenelement jedoch ebenfalls einsetzbar. Besonders bevorzugt wird der Einsatz in der Fahrzeugtechnik zur Lagerung eines Antriebsstranges, um eine spielfreie oder möglichst spielfreie Axiallagerung beispielsweise eines Getriebes zur Lenksäulenverstellung umzusetzen.

Das Lagerelement besteht vorzugsweise aus einem einstückigen Körper, ist jedoch auch aus mehreren Einzelkomponenten zusammengesetzt, beispielsweise zusammengeschweißt, vorstellbar. Der eigentliche Lagerabschnitt, an dem das Lagergegenelement insbesondere als eine Welle anliegt, ist vorzugsweise kugelförmig, um die Kontaktfläche und damit Reibungsfläche zu reduzieren. Die Anlageabschnitte entsprechen den Bereichen, in denen das Lagerelement an einer Wandung des Lagers anliegt und entsprechen beim Stand der Technik der Umfangsfläche sowie der Bodenfläche des Lagerelements, welche an einer Seitenwandung bzw. Bodenwandung des Lagers anliegen. Unter Wandungen des Lagers sind allgemeine Wandungen zu verstehen, welche nicht zwingend auf großflächige Wandungen beschränkt sind. Ggf. kann die Wandung auch aus einer klein dimensionierten Bohrung oder einem Kontaktierungsvorsprung oder dgl. bestehen.

Im Fall einer Welle oder Achse als Lagergegenelement und einem kugelförmigen Lagerabschnitt ist die Ausrichtung vorteilhafterweise so zu verstehen, dass die Kraftkomponente des Lagergegenelements mit der Rotationsachse bzw. Längsachse der Welle bzw. Achse zusammenfällt und in axialer Richtung auf das Lagerelement einwirkt. Ein Einspannen des Lagerelements zwischen seitlichen Wandungen ist dadurch möglich, dass der Außenumfang des Lagerelements in seitlicher Richtung größer als der Innenumfang der Lageröffnung ist, in welche das Lagerelement dann unter Vorspannung eingesetzt wird. Möglich ist aber auch die Verwendung eines Lagerelements mit gleichem oder geringerem Außenumfang als dem Innenumfang der Lageröffnung zur Aufnahme des Lagerelements, wenn das Lagerelement durch die Kraftkomponente aus Richtung der Vorderseite des Lagerabschnitts einerseits und durch ein weiteres Einspannelement, beispielsweise die Bodenwandung des Lagers eingespannt wird, so dass aufgrund der elastischen Eigenschaft des Materials eine Ausdehnung der Justier-und/oder Stützelemente des Lagerelements in seitlicher Richtung erfolgt.

Die Justier- und/oder Stützelemente sind zueinander räumlich beabstandet, worunter beispielsweise zu verstehen ist, dass zwischen diesen ein Spalt oder Schlitz ausgebildet ist. Jedoch wird gemäß bevorzugter Ausführungsform eine breitere Beabstandung umgesetzt. Entscheidend ist letztendlich, dass die zueinander benachbarten Justier- und/oder Stützelemente nicht direkt fest miteinander verbunden sind, sondern indirekt über den Lagerabschnitt bzw. einen zentralen Abschnitt des Lagerelements, welcher unter anderem auch den Lagerabschnitt aufweist.

Soweit die einzelnen Komponenten des Lagerelements einen bogenförmigen oder nicht geradlinigen Verlauf aufweisen, wird ein im mathematischen Sinne glatter Verlauf bevorzugt. Prinzipiell sind aber auch abgestufte Oberflächen und Konturen mit Kanten einsetzbar, sofern diese noch die Funktionalität und die elastische Wirkung eines glatten bogenförmigen Verlaufs für den Zweck der Justierung und/oder Einspannung des Lagerelements in einer Lageröffnung zur Aufnahme des Lagerelements ermöglichen. Auch solche Konturen sind als bogenförmig zu verstehen.

Ein Ausführungsbeispiel und alternative Ausführungsformen dazu werden nachfolgend anhand der Zeichnung näher erläutert.
Es zeigen:
- Fig. 1: eine in einem Gehäuse mit einem Lagerelement axial stirnseitig gelagerte Welle;
- Fig. 2 - 4: verschiedene Ansichten eines solchen Lagerelements gemäß einer bevorzugten Ausführungsform;
- Fig. 5: ein Lagerelement gemäß einer Ausführungsform, die nicht die kennzeichnenden Merkmale des Anspruchs 1 aufweist; und
- Fig. 6: das Lagerelement gemäß Fig. 5 in einer Gehäusewandung eingesetzt.

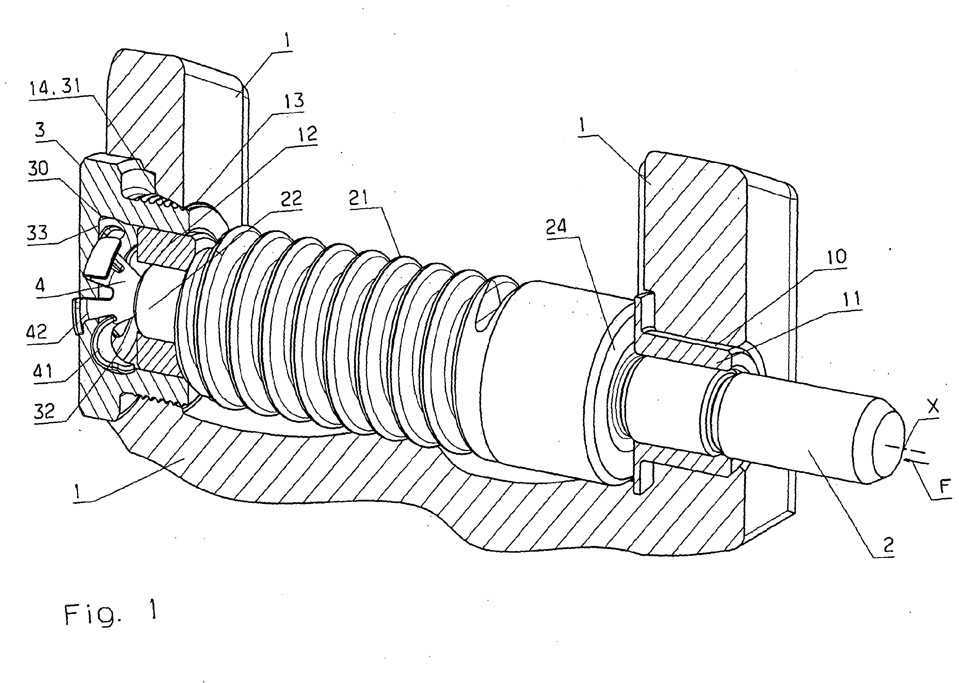

Fig. 1 zeigt eine Teilschnittansicht einer Lageranordnung. Dargestellt sind zwei Lagerwandungen 1 einer übergeordneten Einrichtung, in welcher ein Lagergegenelement 2, insbesondere wie dargestellt eine Achse bzw. Welle 2 vorzugsweise spielfrei gelagert ist. Beispielsweise handelt es sich bei der Achse bzw. Welle 2 um einen Antriebsstrang eines Getriebes.

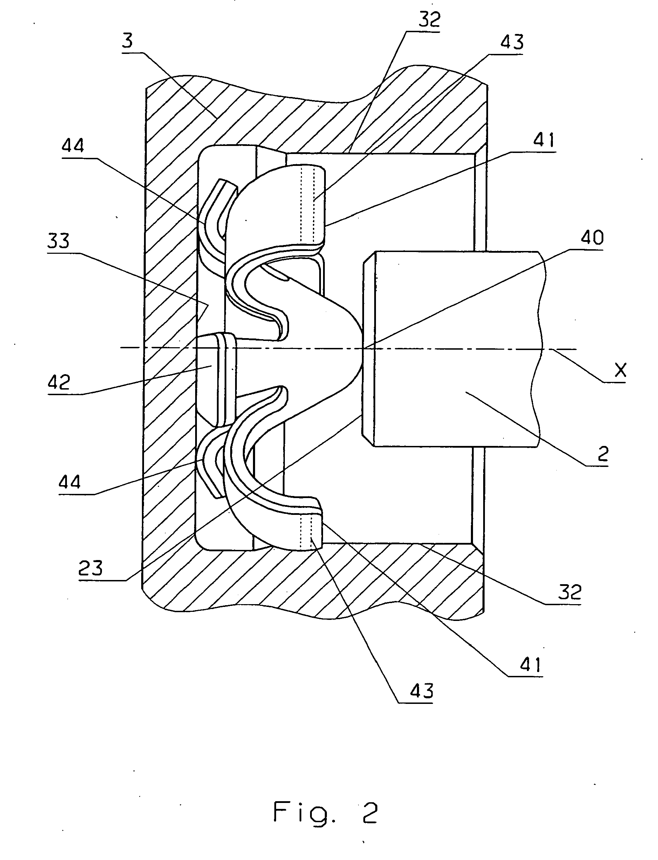

Von der in der Zeichnung rechten Seite aus führt die Welle 2 durch eine Lagerbuchse 11, welche in einer Lageraufnahmeöffnung 10 der ersten Lagerwandung 1 gelagert ist, hindurch. In Richtung der zweiten Lagerwandung 1 führt die Welle 2 durch eine Schnecke 21 hindurch, wobei die Schnecke 21 und die Welle 2 fest miteinander verbunden sind, so dass eine Rotation der Welle 2 auf die Schnecke 21 bzw. umgekehrt eine Rotation der Schnecke 21 auf die Welle 2 übertragbar ist. Aus dem in der Zeichnung linksseitigen Ende der Schnecke 21 ragt ein stirnseitiger Endabschnitt 22 der Welle 2 heraus, welcher eine stirnseitige Fläche als stirnseitiges Wellenlager 23, welches aus Fig. 2 ersichtlich ist, aufweist. Der stirnseitige Endabschnitt 22 der Welle 2 ist in einer weiteren Lagerbuchse 12 gelagert, wobei der stirnseitige Endabschnitt 22 der Welle 2 nicht notwendig ganz durch die Lagerbuchse 12 hindurch oder sogar aus dieser wieder hinausführt.

Die Lagerbuchse 12 ist ihrerseits in einem Einstellelement 3 aufgenommen, insbesondere rotationsfest und in aus Sicht der Welle 2 radialer Richtung spielfrei in dem Einstellelement 3 angeordnet. Das Einstellelement 3 bildet eine Aufnahmeöffnung 30 zur Aufnahme unter anderem der Lagerbuchse 12 aus. Außerdem ist das Einstellelement 3 außenseitig in einer Lageraufnahmeöffnung 13 aufgenommen, welche in der zweiten Lagerwandung 1 ausgebildet ist.

Das Einstellelement 3 weist ein außenseitiges Gewinde 31 auf, welches in ein innenseitiges Gewinde 14 der Lageraufnahmeöffnung 13 eingreift, so dass das Einstellelement 3 in der zweiten Lagerwandung 1 in axialer Richtung der Welle 2 geeignet weit einschraubbar ist.

Das Einstellelement 3 ist im Wesentlichen topfförmig ausgebildet, so dass die Aufnahmeöffnung 30 des Einstellelements 3 eine umlaufende Seitenwandung 32 sowie eine Bodenwandung 33 aufweist. Im vorderseitigen Abschnitt der Seitenwandung 32, d. h. in Richtung der Welle 2 bzw. der ersten Lagerwandung 1, ist die Lagerbuchse 12 aufgenommen. Zwischen dem vorderseitigen Abschnitt der Aufnahmeöffnung 30 mit der Lagerbuchse 12 und der darin aufgenommenen Welle 2 einerseits und andererseits der vorderseitigen Bodenwandung 33 des Einstellelements 3 besteht ein freier Raum, in welchem ein Lagerelement 4 zum stirnseitigen Lagern und Abstützen des stirnseitigen Achslagers 23 der Welle 2 angeordnet ist.

Das Lagerelement 4 besteht aus einem elastischen, insbesondere federelastischen Material und ist zwischen dem stirnseitigen Wellenlager 23 der Welle 2 und der Bodenwandung 33 unter Einwirkung einer mechanischen Spannung eingespannt. Die Spannung kann durch Aufbringen einer Kraftkomponente F der Welle 2 in Richtung ihres stirnseitigen Wellenlagers 23 auf das Lagerelement 4 einwirken. Bevorzugt wird gemäß der dargestellten Ausführungsform jedoch ein Verschrauben des Einstellelements 3 in der Lageraufnahmeöffnung 13 in Richtung des stirnseitigen Wellenlagers 23 der Welle 2. Dadurch wird das Lagerelement 4 von der Bodenwandung 33 des Einstellelements 3 gegen das stirnseitige Wellenlager 23 gespannt. Um eine Gegenspannung aufzubauen, bildet beispielsweise das vom stirnseitigen Wellenlager 23 abgewandte Ende der Schnecke 21 ein Wellengegenlager 24 aus, welches längs der dem stirnseitigen Wellenlager 23 zugewandten Seitenwandung der Lagerwandung 1 vorzugsweise reibungsfrei gelagert anliegt. Letztendlich entscheidend ist jedoch lediglich, dass das stirnseitige Wellenlager 23 der Welle 2 als Lagergegenelement geeignet angeordnet und ggf. durch die Welle 2 in axialer Richtung einer Wellenachse X eingespannt ist.

Wie auch aus den Fig. 2 - 4 ersichtlich ist, besteht das Lagerelement 4 aus einem vorzugsweise einstückigen Körper mit einem zentralen Lagerabschnitt 40 und von diesem seitlich abstehenden Justier- und/oder Stützelementen 41, 42. Der zentrale Lagerabschnitt 40 ist vorzugsweise in Richtung der Welle 2 konvex, insbesondere kugelförmig geformt, so dass zwischen dem Lagerabschnitt 40 und dem stirnseitigen Wellenlager 23 eine vorzugsweise nur geringflächige, insbesondere punktförmige Kontaktfläche besteht, welche der Welle 2 eine geringst mögliche Reibung bei einer Rotation der Welle 2 gegenüber dem feststehenden Lagerelement 4 entgegensetzt. Das Lagerelement 4 besteht somit vorzugsweise aus einem einerseits elastischen und andererseits abriebfesten oder abriebfest beschichteten bzw. gehärteten Material.

Bei der erfindungsgemäßen Ausführungsform des Lagerelements 4 weist dieses zwei verschiedene Arten von Justier- und/oder Stützelementen 41, 42 auf. Erste Justier-und/oder Stützelemente 41 dienen zum Abstützen und zugleich vorzugsweise automatischen Justieren des Lagerelements 4 an den Seitenwandungen 32 des Einstellelements 3. Zweite Justier- und/oder Stützelemente 42 dienen zum Abstützen und vorzugsweise automatischen Justieren des Lagerelements 4 gegenüber der Bodenwandung 33 des Einstellelements 3.

Die Justier- und/oder Stützelemente 41, 42 ragen vom Rand des Lagerabschnitts 40 aus in seitlicher Richtung weg, wobei sie bogenförmig verlaufend ausgebildet sind. Unter Bogenform ist dabei nicht zwingend eine Verlaufskontur mit konstantem Radius zu verstehen, sondern lediglich ein Verlauf, welcher gemäß bevorzugten Ausführungsform durch einfaches Verformen eines ursprünglich flächigen Werkstücks erzielbar ist. Insbesondere bietet ein bogenförmiger Verlauf besonders gute elastische Eigenschaften im Vergleich zu einem Verlauf mit sehr scharfen kantigen Konturen quer zur Längsrichtung der Justier- und/oder Stützelemente 41, 42. In einem vom Lagerabschnitt 40 abgewandten Bereich weisen die Justier-und/oder Stützelemente 41, 42 jeweils zumindest einen Anlageabschnitt 43 bzw. 44 auf. Die Anlageabschnitte 43, 44 können dabei durch einen punktförmigen, einen linienförmigen oder einen flächigen Oberflächenabschnitt des jeweiligen Justier- und/oder Stützelements 41, 42 ausgebildet sein. Die Anlageabschnitte 43, 44 dienen zum Anlegen und Abstützen des jeweiligen Justier- und/oder Stützelements 41, 42 an der Seitenwandung 32 bzw. an der Bodenwandung 33 der Aufnahmeöffnung 30 des Lagers.

Aus Sicht der Wellenachse X der beispielhaften Welle 2 bilden die ersten, seitlich gerichteten Justier- und/oder Stützelemente 41 im Bereich ihrer Anlageabschnitte 43 eine seitliche Erstreckung des Lagerelements 4 in radialer Richtung mit einem Radius r aus, welcher vorzugsweise größer als der Innenradius der Aufnahmeöffnung 30 ist. Dadurch wird das Lagerelement 4 beim Einsetzen elastisch verformt, so dass die ersten Justier- und/oder Stützelemente 41 unter einer Vorspannung an der Seitenwandung 32 der Aufnahmeöffnung 30 anliegen.

Vorzugsweise ist der Radius der seitlichen Erstreckung der zweiten Justier- und/oder Stützelemente 42 um einen Differenzradiusbetrag r1 geringer als der Radius r der radialen Erstreckung der ersten Justier- und/oder Stützelemente 41.

In axialer Richtung der Welle 2 erstrecken sich die ersten Justier- und/oder Stützelemente 41 vorzugsweise um eine Differenzstrecke x1 weniger weit in axialer Richtung als die zweiten Justier- und/oder Stützelemente 42, welche in axialer Richtung bzw. aus Sicht der Welle 2 in vorderseitiger Richtung an der Bodenwandung 33 abgestützt sind.

Besonders bevorzugt wird ein solches Lagerelement 4 mit jeweils drei oder ggf. mehr ersten und zweiten Justier-und/oder Stützelementen 41, 42, da eine solche Anordnung nicht nur ein sicheres elastisches Abstützen des Lagerelements 4 in der Aufnahmeöffnung 30 sondern auch ein automatisches eigenständiges Justieren des Lagerelements 4 in der Aufnahmeöffnung 30 ermöglicht.

Eine Beabstandung zwischen den jeweils benachbarten der Justier- und/oder Stützelemente 41, 42 kann prinzipiell minimal ausgebildet sein, d. h. beispielsweise durch einen Spalt ausgebildet sein. Bevorzugt werden jedoch gemäß erster Versuche Beabstandungen mit einer Abstandsbreite sb größer einem Spalt und insbesondere mit einer Abstandsbreite sb der Übergangsbreite der einzelnen Justier- und/oder Stützelemente 41, 42 zu dem Lagerabschnitt 40 hin.

Ein derartiges Lagerelement 4 ist gemäß der bevorzugten Ausführungsform insbesondere mit Blick auf die 2-mal 3-fache selbstzentrierende Ausrichtung in der Aufnahmeöffnung bei der Montage vorteilhaft. Ermöglicht wird ein Lagersystem, bei welcher das Lagergegenelement, insbesondere die Stirnseite bzw. das stirnseitige Wellenlager 23 einer rotierenden Welle 2 auch unter wechselnder Lastrichtung spielfrei gehalten wird. Außerdem wird auch bei dieser Ausgestaltung eine Minimierung der Reibung durch Punktlast im zentralen Abschnitt des Lagerabschnitts 40 ermöglicht. Eine entsprechende Materialauswahl oder Materialbearbeitung ermöglicht einen verschleißfreien Betrieb. Das automatische Justieren erfolgt sowohl in seitlicher als auch in axialer Richtung.

Ermöglicht wird insbesondere eine Lageranordnung ohne die Verwendung einer Stahlkugel und einer gehärteten Anlaufscheibe, wobei auch eine entsprechend ausgebildete Stirnseite mit einer Aufnahmemulde für eine Stahlkugel in der Welle 2 entbehrlich ist.

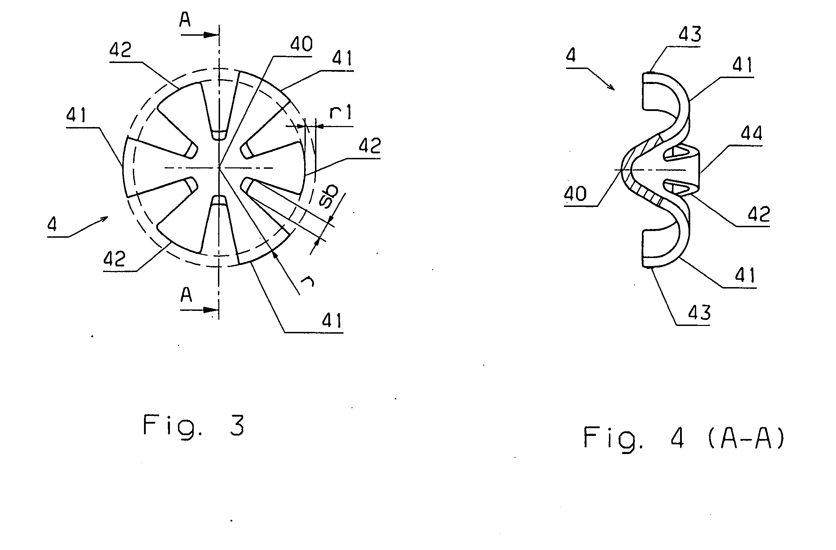

Bei der Montage einer Anordnung gemäß Fig. 4 wird beispielsweise ein Gleitlager in Form der Lagerbuchse 11 in der Lageraufnahmeöffnung 10 der ersten Lagerwandung 1 eingesetzt, nachfolgend ein Axiallager, insbesondere Kugellager, wie das Wellengegenlager 24, auf die Welle von rechts bis zur Schnecke 21 hin aufgesteckt, bevor die Welle 2 von links her durch die Lagerbuchse 11 eingesetzt wird. Nachfolgend wird auf dem stirnseitigen Endabschnitt 22 der Welle 2 die Lagerbuchse 12 als weiteres Gleitlager aufgesetzt, das Lagerelement 4 in die Aufnahmeöffnung 30 des Einstellelements eingelegt und letztendlich das Einstellelement 3 in die Lageraufnahmeöffnung 13 der zweiten Lagerwandung 1 eingesetzt. Das Einsetzen des Einstellelements 3 erfolgt dabei durch Einschrauben, wobei das Lagerelement 4 mit seinen zweiten Justier- und/oder Stützelementen 42 und seinem diesen gegenüber liegenden Lagerabschnitt 40 zwischen der Bodenwandung 33 des Einstellelements 3 und dem stirnseitigen Wellenlager 23 der Welle 2 in gewünschtem Maße eingespannt wird.

Letztendlich übernimmt das Lagerelement 4 drei bauteilfremde Funktionen, so dass der Montageaufwand sowie die Anzahl der zu montierenden Elemente eines entsprechenden Getriebestrangs deutlich minimierbar sind. Der Lagerabschnitt 40 ist vorzugsweise kugelig ausgeführt und bildet einen Ersatz für eine ansonsten übliche Stahlkugel unter Minimierung der Gleitreibung durch eine aufliegende Punktlast. Die seitlichen Justier- und/oder Stützelemente 41 dienen als Arme zur Zentrierung und Klemmung des Lagerelements 4 in dem Einstellelement 3. Drei Arme ermöglichen eine besonders gute Zentrierung und bieten gleichzeitig eine Verdrehsicherung durch eine entsprechende radiale Vorspannung, welche durch ein Übermaß der Zentrierarme bzw. Justier- und/oder Stützelemente 41 erzielbar ist. Das Übermaß wird insbesondere durch eine Verlängerung der Justier- und/oder Stützelemente 41, 42 über die Anlageabschnitte 43 bzw. 44 in außenseitiger Richtung der Justier- und/oder Stützelemente 41, 42 ausgebildet. Gebildet wird letztendlich eine Funktionsfläche in Art von Kreisbogensegmenten für eine Zentrierung und Klemmung des Lagerelements 4. Die zweiten Justier- und/oder Stützelemente 42 ersetzen eine ansonsten übliche Federscheibe und bieten eine verbesserte Federwirkung in axialer Richtung, d. h. in Richtung der Kraftkomponente F. Die Dimensionierung des Übergangs der Justier- und/oder Stützelemente 41, 42 zum Lagerabschnitt 40 bildet eine Funktionsfläche aus, welche die Federwirkung beeinflusst. Durch insbesondere eine Querschnittsänderung, beispielsweise aber auch Stegbreite, Materialstärke und elastische Eigenschaft, beispielsweise Federstahlqualität, ist die Federkraft variabel an die Bedürfnisse des speziellen Lagerelements 4 anpassbar.

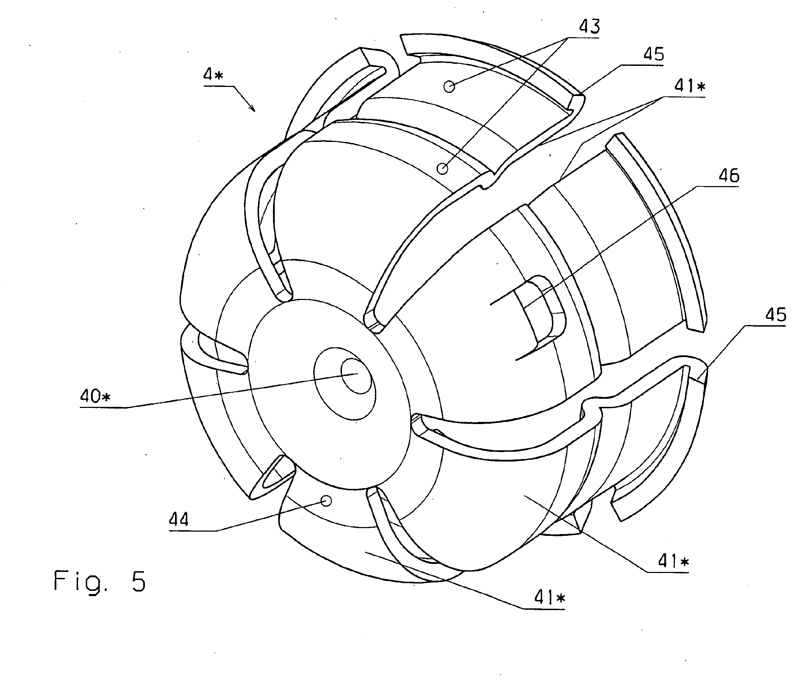

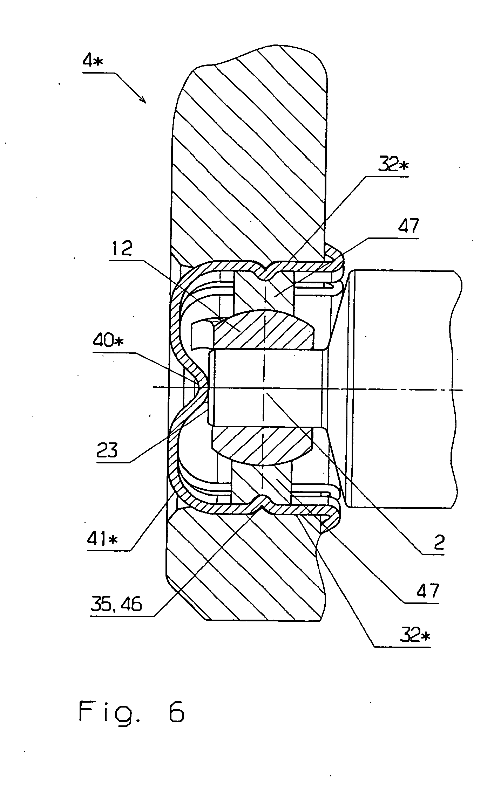

Gemäß der zweiten, nicht durch die Ansprüche geschützten Ausführungsform, welche anhand der Figuren 5 und 6 veranschaulicht ist, weist das Lagerelement 4* nicht einen blumenkelchförmigen Aufbau sondern einen topfförmigen Aufbau mit topfinnenseitig gewölbtem Lagerabschnitt 40* auf. Bei dieser Anordnung sind die in Fig. 2 veranschaulichten Justier- und/oder Stützelemente in rückwärtig axialer Richtung verlängert und bilden Justier- und/oder Stützelemente 41* aus, welche über eine größere Fläche hinweg an der Seitenwandung 32* anliegen.

Vorteilhafterweise sind in den Justier- und/oder Stützelementen 41* an deren Rand und/oder in derem sonstigen Wirkbereich gegenüber der Seitenwandung 32* und ggf. einer Bodenwandung 33 Fixierungselemente 45, 46 ausgebildet, welche in entsprechende Gegenfixierungselemente 35 der Seitenwandung 32* eingreifen. Die Fixierungselemente 45, 46, 35 können in üblicher Art und Weise punkt-, linien- oder flächenförmig ausgebildet sein. Beispielsweise können die Fixierungselemente 45, 46, 35 als Vorsprünge, Einbuchtungen, Umfangswandungen oder Haken ausgebildet sein.

Zur Verstärkung des Halts bzw. der Andruckkraft der seitlichen Justier- und/oder Stützelemente 41* an der Seitenwandung 32* ist innenseitig der Justier- und/oder Stützelemente 41* vorzugsweise ein elastisches Element 47 angeordnet, insbesondere ein ringförmiges elastisches Element 47, welches eine radial nach außen wirkende Kraft auf die Justier- und/oder Stützelemente 41* ausübt. Die Fixierungselemente können insbesondere auch in Form einer Ringnut oder Ringwulst längs der Justier- und/oder Stützelemente 41* verlaufen.

Ein Lagerelement 4* gemäß der zweiten Ausführungsform ermöglicht insbesondere den Wegfall eines Einstellelements 3, wobei das Lagerelement 4^{*} dann direkt in einer Bohrungs- oder topfförmigen Lageraufnahmeöffnung 13 des Lagers bzw. der zweiten Lagerwandung 1 einsetzbar ist. Die einzelnen Justier-und/oder Stützelemente liegen entsprechend wieder an den Seitenwandungen 32* und ggf. an einer entsprechenden Bodenwandung an. Insbesondere ermöglicht die Formgebung eines solchen Lagerelements 4* als ein Bauteil eine lagerichtige Verbindung in einer Lageraufnahmeöffnung 13 sowie gegenüber einem Lagergegenelement wie der Welle 2. Bei Vorsehen von Fixierungselementen erfolgt die Montage des Lagerelements 4* insbesondere durch Einschnappen bzw. Einrasten in einer gewünschten Position in dem Lager. Insbesondere kann eine falsche Positionierung des Lagerelements 4* durch Anschläge als Fixierungselemente verhindert werden. Integrierte Haken, insbesondere radial am Lagerelement 4* angeordnete integrierte Haken können auch derart ausgebildet werden, dass diese ähnlich einem Widerhaken wirken. Eine Positionierung des Lagerelements 4* wird dadurch noch flexibler und das Lagerelement 4* hinsichtlich der Montage toleranzunabhängiger.

## Patentansprüche

1. Lagerelement (4; 4*) für ein Axiallager zum gelagerten Abstützen eines Lagergegenelements (2), wobei das Lagerelement (4) aufweist
- einen Lagerabschnitt (40), an dem das Lagergegenelement (2) mit einer axialen Kraftkomponente (F) in Richtung des Lagerabschnitts (40) gelagert abstützbar ist, und
- zumindest einen Anlageabschnitt seitlich des Lagerabschnitts (40) zum Anlegen des Lagerelements (4) an einer Seitenwandung (32) des Lagers zum Festlegen und/oder Ausrichten des Lagerelements (4) im Lager,
- Justier- und/oder Stützelemente (41, 42), welche seitlich vom Lagerabschnitt (40) wegragen, wobei die Justier- und/oder Stützelemente (41, 42) zu jeweils benachbarten Justier- und/oder Stützelementen (41, 42) räumlich beabstandet sind und wobei die Justier- und/oder Stützelemente (41, 42) von dem Lagerabschnitt (40) beabstandet jeweils zumindest einen Anlageabschnitt (43, 44) ausbilden, und
bei dem zumindest ein Teil der Justier- und/oder Stützelemente (41) vom Lagerabschnitt (40) aus derart geformt ist, dass deren Anlageabschnitt (43) an einer Seitenwandung (32), welche seitlich des Lagerabschnitts (40), insbesondere parallel zur Kraftkomponente (F) in Richtung des Lagerabschnitts (40), und beabstandet zu dem Lagerabschnitt (40) als Wandung des Lagers angeordnet ist, anliegend und an der Seitenwandung (32) abgestützt anordenbar ist, insbesondere unter Spannung anliegend abgestützt anordenbar ist; und
bei dem zumindest ein Teil der Justier- und/oder Stützelemente (42) vom Lagerabschnitt (40) aus derart gebogen geformt ist, dass deren Anlageabschnitt (44) an einer Rückseitenwandung (33), welche rückseitig des Lagerabschnitts (40) gegenüber dem vorderseitigen Lagergegenelement (2) und beabstandet zu dem Lagerabschnitt (40) als Wandung des Lagers angeordnet ist, anliegend und an der Rückseitenwandung (33) abgestützt anordenbar ist, insbesondere unter Spannung anliegend abgestützt anordenbar ist; **daduch gekennzeichnet**, **dass** die zum Abstützen an der Rückseitenwandung (33) ausgebildeten Justier- und/oder Stützelemente (42) sich in Richtung der Rückseitenwandung (33) axial weiter erstrecken als die zum Abstützen an der Seitenwandung (32) ausgebildeten Justier- und/oder Stützelemente (41).

2. Lagerelement nach Anspruch 1, bei dem zumindest die Justier- und/oder Stützelemente (41, 42) aus einem federelastischen Material bestehen

3. Lagerelement nach Anspruch 1 oder 2, bei dem die zum Abstützen an der Seitenwandung (32) ausgebildeten Justier- und/oder Stützelemente (41) sich in Richtung der Seitenwandung (32) weiter erstrecken als die zum Abstützen an der Rückseitenwandung (33) ausgebildeten Justier- und/oder Stützelemente (42).

4. Lagerelement nach einem der vorstehenden Ansprüche, bei dem die Justier- und/oder Stützelemente (41, 42) derart gebogen geformt sind, dass sie im Bereich von deren Anlageabschnitt (43, 44) parallel zur Wandung (32, 33) des Lagers verlaufen.

5. Lagerelement nach einem vorstehenden Anspruch, bei dem die Justier- und/oder Stützelemente (41, 42) vom Anlageabschnitt (40) aus in einer Richtung von dem Lagergegenelement (2) wegführend mit zumindest einer Richtungsteilkomponente der Kraftkomponente (F) des Lagergegenelements (2) verlaufen.

6. Lagerelement nach einem vorstehenden Anspruch, bei dem der Anlageabschnitt (40) konvex, insbesondere teilkugelförmig in Richtung des Lagergegenelements (2) geformt ist.

7. Lagerelement nach einem vorstehenden Anspruch, bei welchem der Lagerabschnitt (40) und die Justier- und/oder Stützelemente (41, 42) einstückig ausgebildet sind.

8. Axiallager zum abgestützten Lagern eines Lagergegenelements (2) mit
- einem Lagerelement (4) nach einem vorstehenden Anspruch und
- einer Wandung, insbesondere Bohrungs- und/oder topfförmigen Wandung (32, 33) einer Aufnahmeöffnung (30) des Lagers zum Festlegen und/oder Ausrichten des Lagerelements (2) im Lager, wobei
- das Lagerelement (4) mit seinen Justier- und/oder Stützelementen (41) in seitlicher Richtung aus Sicht einer Kraftkomponente des Lagergegenelements (2) in Richtung des Lagerelements (4) zwischen den Wandungen (32) sich selbst ausrichtend eingespannt ist und/oder in Abstützrichtung des Lagergegenelements (4) zwischen dem Lagergegenelement (2) und einer bodenförmigen Wandung (33) der Wandung des Lagers sich selbst ausrichtend eingespannt ist.

9. Axiallager nach Anspruch 8 mit einer Achse oder Welle (2) als Lagergegenelement, wobei die Achse bzw. Welle (2) stirnseitig in axialer Richtung am Lagerabschnitt (40) abgestützt ist.

## Claims

1. Bearing element (4; 4*) for an axial bearing for bearingly supporting a bearing counter-element (2), wherein the bearing element (4) comprises
- a bearing section (40) on which the bearing counter-element (2) can be bearingly supported with an axial force component (F) in the direction of the bearing section (40), and
- at least one contact section to the side of the bearing section (40) for applying the bearing element (4) against a side wall (32) of the bearing in order to fix and/or orient the bearing element (4) in the bearing,
- adjustment and/or support elements (41, 42) which protrude laterally away from the bearing section (40), wherein the adjustment and/or support elements (41, 42) are physically spaced apart from respectively adjacent adjustment and/or support elements (41, 42), and wherein the adjustment and/or support elements (41, 42) in each case form at least one contact section (43, 44) at a distance from the bearing section (40), and
in which at least some of the adjustment and/or support elements (41) are shaped from the bearing section (40) in such a way that their contact section (43) can be arranged so as to bear against a side wall (32) and be supported against the side wall (32), said side wall being arranged to the side of the bearing section (40), in particular parallel to the force component (F) in the direction of the bearing section (40), and at a distance from the bearing section (40) as a wall of the bearing, and in particular can be arranged so as to bear and be supported against said side wall under tension, and
in which at least some of the adjustment and/or support elements (42) are shaped in a curved manner from the bearing section (40) in such a way that their contact section (44) can be arranged so as to bear against a rear wall (33) and be supported against the rear wall (33), said rear wall being arranged to the rear of the bearing section (40) relative to the bearing counter-element (2) at the front, and at a distance from the bearing section (40) as a wall of the bearing, and in particular can be arranged so as to bear and be supported against said rear wall under tension,
**characterised in that**
the adjustment and/or support elements (42) configured to be supported against the rear wall (33) extend axially further in the direction of the rear wall (33) than the adjustment and/or support elements (41) configured to be supported against the side wall (32).

2. Bearing element according to claim 1, in which at least the adjustment and/or support elements (41, 42) are made from a spring-elastic material.

3. Bearing element according to claim 1 or 2, in which the adjustment and/or support elements (41) configured to be supported against the side wall (32) extend further in the direction of the side wall (32) than the adjustment and/or support elements (42) configured to be supported against the rear wall (33).

4. Bearing element according to one of the preceding claims, in which the adjustment and/or support elements (41, 42) are shaped in a curved manner in such a way that they run parallel to the wall (32, 33) of the bearing in the region of their contact section (43, 44).

5. Bearing element according to a preceding claim, in which the adjustment and/or support elements (41, 42) run out from the bearing section (40) in a direction leading away from the bearing counter-element (2) with at least one directional sub-component of the force component (F) of the bearing counter-element (2).

6. Bearing element according to a preceding claim, in which the bearing section (40) is shaped in a convex manner, in particular in a partially spherical manner, in the direction of the bearing counter-element (2).

7. Bearing element according to a preceding claim, in which the bearing section (40) and the adjustment and/or support elements (41, 42) are formed in one piece.

8. Axial bearing for the supported bearing of a bearing counter-element (2), comprising
- a bearing element (4) according to a preceding claim, and,
- a wall, in particular a bore and/or pot-shaped wall (32, 33) of a receiving opening (30) of the bearing for fixing and/or orienting the bearing element (2) in the bearing, wherein
- the bearing element (4) is clamped by its adjustment and/or support elements (41) in a self-orienting manner between the walls (32) in the lateral direction from the point of view of a force component of the bearing counter-element (2) in the direction of the bearing element (4) and/or is clamped in a self-orienting manner in the support direction of the bearing element (4) between the bearing counter-element (2) and a base-like wall (33) of the wall of the bearing.

9. Axial bearing according to claim 8, comprising a spindle or shaft (2) as the bearing counter-element, wherein the spindle or shaft (2) is supported against the bearing section (40) at its front end in the axial direction.

## Revendications

1. Elément de palier axial (4, 4*) pour supporter un élément de palier complémentaire (2),
l'élément de palier (4) comprenant :
- un segment de palier (40) qui soutient l'élément complémentaire de palier (2) avec une composante axiale de force (F) en direction du segment de palier (40), et
- au moins un segment d'appui latéral du segment de palier (40) pour recevoir l'élément de palier (4) contre une paroi latérale (32) du palier pour fixer et/ou aligner l'élément de palier (4) dans le palier,
- des éléments d'ajustage et/ou d'appui (41, 42) qui s'écartent latéralement du segment de palier (40), les éléments d'ajustage et/ou d'appui (41, 42) étant écartés dans l'espace par rapport aux éléments d'ajustage et/ou d'appui (41, 42) respectivement voisins, et
- les éléments d'ajustage et/ou d'appui (41, 42) s'écartant du segment de palier (40) en formant chaque fois au moins un segment d'appui (43, 44), et selon lequel au moins une partie des éléments d'ajustage et/ou d'appui (41) étant formés par le segment de palier (40) pour que leur segment d'appui (43) se trouve contre une paroi latérale (32) située à côté du segment de palier (40), notamment parallèlement à la composante de force (F) en direction du segment de palier (40), en étant écartés du segment palier (40) comme paroi du palier, en s'appuyant et en étant appuyés contre la paroi latérale (32), notamment en étant appuyés avec contrainte, et
- au moins une partie des éléments d'ajustage et/ou d'appui (42) du segment de palier (40) étant formés avec une courbure telle que leur segment d'appui (44) se trouve contre une paroi arrière (33) du côté arrière du segment de palier (40), par rapport à l'élément complémentaire de palier (2) côté avant, en étant écartés du segment de palier (40), et en s'appuyant contre la paroi latérale arrière (33), en étant appuyés notamment sous tension,
**caractérisé en ce que**
les éléments d'ajustage et/ou d'appui (42) destinés à s'appuyer contre la paroi arrière (33) s'étendent dans la direction de la paroi arrière (33), axialement, au-delà des éléments d'ajustage et/ou d'appui (41) s'appuyant contre la paroi latérale (32).

2. Elément de palier selon la revendication 1,
selon lequel
les éléments d'ajustage et/ou d'appui (41, 42) sont en un matériau élastique comme un ressort.

3. Elément de palier selon la revendication 1 ou 2,
selon lequel
les éléments d'ajustage et/ou d'appui (41) s'appuyant contre la paroi latérale (32), s'étendent plus loin dans la direction de la paroi latérale (32) que les éléments d'ajustage et/ou d'appui (42) réalisés pour s'appuyer contre la paroi arrière (33).

4. Elément de palier selon les revendications précédentes,
selon lequel
les éléments d'ajustage et/ou d'appui (41, 42) sont de forme cintrée pour que leur segments d'appui (43, 44), soient parallèles à la paroi (32, 33) du palier.

5. Elément de palier selon les revendications précédentes,
selon lequel
les éléments d'ajustage et/ou d'appui (41, 42) s'écartent du segment d'appui (40) en direction de l'élément complémentaire de palier (2) avec au moins une composante partielle de direction de la composante de force (F) de l'élément complémentaire de palier (2).

6. Elément de palier selon les revendications précédentes,
selon lequel
le segment d'appui (40) est de forme convexe, notamment en forme de calotte sphérique tournée en direction de l'élément complémentaire de palier (2).

7. Elément de palier selon les revendications précédentes,
selon lequel
le segment de palier (40) et les éléments d'ajustage et/ou d'appui (41, 42) sont réalisés en une seule pièce.

8. Palier axial pour soutenir un élément complémentaire de palier (2) comportant :
- un élément de palier (4) selon les revendications précédentes, et
- une paroi notamment une paroi (32, 33) en forme de perçage et/ou de pot, d'un orifice de réception (30) du palier pour fixer et/ou aligner l'élément de palier (2) dans le palier,
selon lequel
- l'élément de palier (4) est mis en tension de façon à s'aligner automatiquement avec ses éléments d'ajustage et/ou d'appui (41), dans la direction latérale selon une composante de force de l'élément complémentaire de palier (2), en direction de l'élément de palier (4), entre les parois (32) et/ou il est serré de manière à s'aligner automatiquement dans la direction d'appui de l'élément complémentaire de palier (2), entre l'élément de palier complémentaire (2) et une paroi arrière (33) de la paroi du palier.

9. Palier axial selon la revendication 8, comportant un arbre ou un axe (2) comme élément complémentaire de palier, l'axe ou l'arbre (2) étant appuyé dans la direction axiale contre le segment de palier (40).
